(19) Europäisches Patentamt / European Patent Office / Office européen des brevets

(11) **EP 3 412 910 B1**

(12) **EUROPEAN PATENT SPECIFICATION**

(45) Date of publication and mention of the grant of the patent:
**15.04.2020 Bulletin 2020/16**

(21) Application number: **18176647.8**

(22) Date of filing: **07.06.2018**

(51) Int Cl.:
*F03D 9/32* *(2016.01)*      *B62D 35/00* *(2006.01)*
*B63H 9/00* *(2006.01)*      *B60K 25/00* *(2006.01)*
*B62D 25/06* *(2006.01)*      *B62D 47/02* *(2006.01)*
*B60K 16/00* *(2020.01)*

(54) **PARAPET FOR A VEHICLE FOR THE PUBLIC TRANSPORT OF PASSENGERS**

**GELÄNDER FÜR EIN FAHRZEUG FÜR DEN ÖFFENTLICHEN TRANSPORT VON PASSAGIEREN**

**PARAPET DESTINÉ À UN VÉHICULE POUR LE TRANSPORT PUBLIC DE PASSAGERS**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.06.2017 IT 201700062420**

(43) Date of publication of application:
**12.12.2018 Bulletin 2018/50**

(73) Proprietor: **IVECO FRANCE S.A.S.**
**69200 Vénissieux (FR)**

(72) Inventor: **CODRON, Stephane**
**69008 LYON (FR)**

(74) Representative: **Bongiovanni, Simone et al**
**Studio Torta S.p.A.**
**Via Viotti, 9**
**10121 Torino (IT)**

(56) References cited:
**EP-A1- 3 067 877      CN-A- 101 508 250**
**JP-A- 2005 121 001      JP-A- 2014 196 667**
**JP-U- S5 640 580      US-A- 4 181 188**

## Description

The present invention relates to a vehicle for the public transport of passengers, in particular to the parapet for a vehicle for the public transport of passengers.

Vehicles for the public transport of passengers, for example buses, comprise a plurality of modules (for example air conditioning modules) positioned on the roof of the vehicles.

In order to prevent the above modules from being visible, said vehicles usually comprise a parapet attached to the roof and covering almost the entire perimeter of the roof. The presence of the parapet hides the presence of modules which are positioned on the vehicle roof and therefore the appearance of the bus is more pleasant.

However, when there is wind or while the vehicle is in motion, the parapet tends to increase the vehicle's aerodynamic drag by creating air vortices.

It is therefore necessary to improve the parapets in order to limit the energy loss they generate when there is wind or when the vehicle is in motion, to reduce the fuel consumption and thus the carbon footprint of vehicles.

Examples of devices which take advantage of air motion with respect to the vehicle during its motion are disclosed in documents EP 3067877 A1, CN101508250 A, JP2014196667 A, US4181188 A, JP2005121001 A or JPS5640580 U.

The objects of this invention are to resolve the above-mentioned problems.

The above-mentioned objects are achieved by a vehicle parapet according to claim 1.

Other characteristics and advantages of the invention will become apparent from the following non-limiting description, provided for illustrative purposes, with reference to the attached drawings in which:

- Figure 1 is a perspective view of a bus provided with a parapet according to the present invention;
- Figure 2 is a perspective view of part of the parapet of Figure 1; and
- Figures 3 and 4 are top views showing the operation of the parapet of Figure 2.

The following description, for the sake of clarity and in a non-limiting manner, refers to a bus and is suitable to be applied to other types of road vehicles for the public transport of passengers.

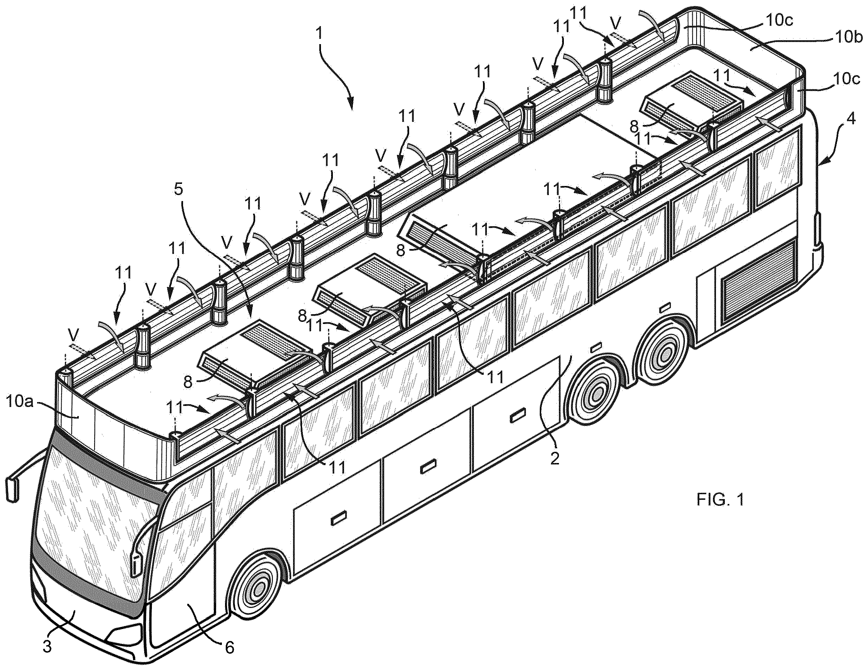

Figure 1 shows a bus 1 of known type essentially comprising a pair of side walls 2, a front wall 3, a rear wall 4 and a roof 5 which delimit an interior space configured for carrying passengers who can board and alight the bus via an access doorway 6.

A plurality of modules 8, for example air conditioning modules or electric battery modules of the bus 1, are housed on the roof 5.

The bus 1 also comprises a parapet 10 attached to the roof 5 and configured to prevent the modules 8 from being visible at ground level. The parapet 10 extends substantially vertically from the surface of the roof 5 and surrounds at least one part of the perimeter of the roof 5, preferably the entire perimeter of the roof 5. The parapet 10 may thus comprise a front part 10a, a rear part 10b and a pair of side parts 10c.

The parapet 10 beneficially comprises, on at least one of the parts 10a, 10b or 10c, at least one energy recovery system 11 configured to recover energy from the air which flows against the parapet 10, more precisely to decrease the aerodynamic drag of the air which flows against the parapet 10 and to use this flow to produce a force F which assists the motion of the bus 1.

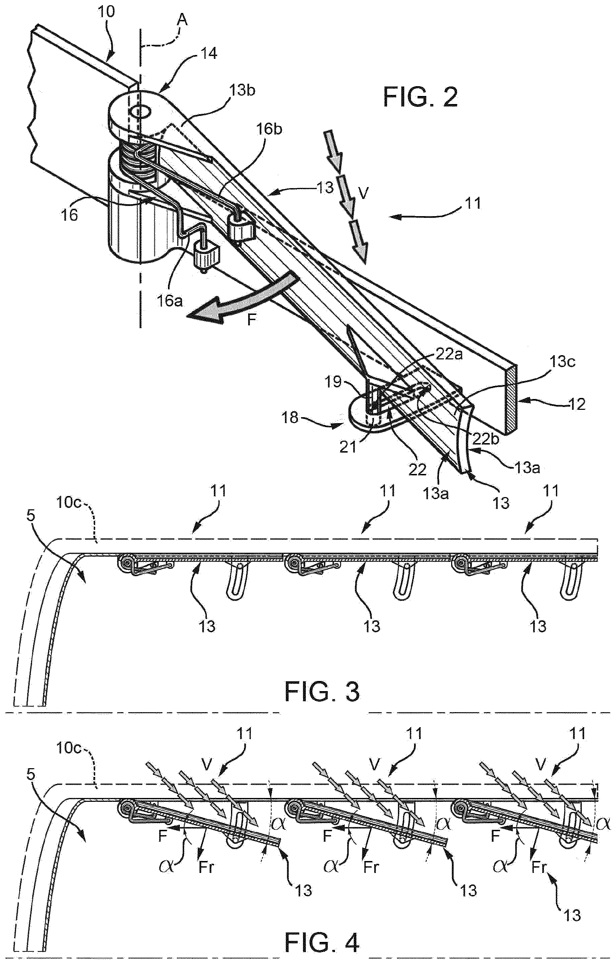

Both side parts 10c preferably have at least one energy recovery system 11, as shown in Figure 2.

The energy recovery system 11 beneficially comprises a fixed portion 12 attached to the roof 5 and a mobile portion 13 configured to move with respect to the fixed portion 12 due to the force exerted by the air striking it. The fixed and mobile portions 12, 13 are preferably substantially rectangular in shape.

Beneficially, at least one of the side walls 13a of the mobile portion 13 is made in such a way that the air can exert a force F which assists the motion of the vehicle 1; at the same time the shape of the side walls 13a facilitates the air flow in order not to produce vortices and thus makes it possible to decrease aerodynamic drag on the motion of the bus 1.

Beneficially, the side walls 13a are therefore curved, more preferably the wall 13a towards the inside of the perimeter of the parapet 10 is convex, and the wall 13a towards the outside of the perimeter of the parapet 10 is concave.

Preferably, the mobile portion 13 is connected to the fixed portion by means of a pivot 14, provided between a first end 13b of the mobile portion and the fixed portion 12, which is configured to allow motion of the mobile portion 13 about an axis A substantially perpendicular to the roof 5.

Beneficially, movement of the mobile portion 13 is only possible towards the inside of the perimeter of the parapet 10 because of the limitations on the maximum width of vehicles. Thus, for example, air coming from the left rear will open the mobile portions 13 on the left side part 10c towards the inside of the perimeter of the parapet 10, while the mobile portions 13 on the right side part 10c will not move.

The energy recovery system 11 may comprise an elastic element between the mobile portion 13 and the fixed portion 12. The elastic element is preferably a coil spring 16 of which a first end 16a is attached to the fixed portion 12 and a second end 16b is attached to the mobile portion 13.

The energy recovery system 11 may also comprise limitation means 18 to limit the movement of the mobile portion 13 relative to the fixed portion 12. Preferably, said limitation means 18 are configured so that the travel α of the mobile portion 13 around the pivot 14 is at most 20°, more preferably 15°.

Even more preferably the limitation means 18 are positioned on an opposite end 13c with respect to the portion 13c of the mobile portion 13.

Preferably said limitation means 18 may comprise a projection 19 connected to the mobile portion 13 at its end portion 13c opposite the portion 13b and a guide 21 fixed to the fixed portion 12 and comprising an opening 22 in which the projection 19 can slide.

The projection 19 can beneficially slide between a first stop 21a defining a position in which the mobile portion 13 is aligned with the fixed portion and a stop 21b defining a position in which the mobile portion 13 is fully open with respect to the fixed portion 12.

The energy recovery systems 11 are positioned close to each other and preferably the fixed portions 12 are connected to each other to form a continuous strip attached to the roof 5 of the vehicle 1.

The energy recovery system 11 functions as follows.

When there is not enough wind or when the air flowing over the mobile portion 13 is not sufficient to overcome the resistance of the spring 16, (Figure 3), the mobile portion 13 is aligned with the fixed portion 12 and the parapet 10 then prevents the modules 8 positioned on the roof 5 from being visible.

When there is wind or when the air flowing over the mobile portion 13 is sufficient to overcome the resistance of the spring 16, (Figure 4) the mobile portion 13 moves by pivoting towards the inside of the perimeter defined by the parapet 10.

The air which flows produces two effects:

• it generates a force F which propels the vehicle in its direction of travel; and/or
• it prevents the formation of air vortices which could increase the vehicle's aerodynamic drag by allowing air to flow over the mobile portion 13.

The force F exerted by the wind flowing over the mobile portion 13 can be calculated approximately with the following equations:

$$(i) \quad F = F_r * \sin(\alpha)$$

$$(ii) \quad F_r = \frac{1}{2}\rho * S * V^2 * C$$

Where:

ρ = air density in kg/m³;
S = surface area of the mobile portion 13 in m²;
V = velocity of the air flowing over the mobile portion 13 in m/s;

C = aerodynamic coefficient, equal to 0.9; and
α = the opening angle of the mobile portion 13 with respect to the fixed portion 12 on the pivot 14.

The force $F_r$ is the resulting force of the air mass which flows over the side wall 13a of the mobile portion 13 and can be estimated with formula (ii). The resulting force $F_r$ is therefore multiplied by the sine of the angle α to obtain the force F which actually propels the vehicle 1.

Assuming a wind having a direction between 90° and 175° with respect to the longitudinal axis of the vehicle and a wind flowing at 30 km/h, the force of the plurality of energy recovery systems 11 on one of the side parts 10c is approximately 20 N. This force propels the vehicle 1 in its direction of travel, producing a reduction in its consumption of approximately 0.3%.

From the foregoing, the benefits of a parapet 10 according to the present invention are apparent.

The parapet 10 comprising at least one energy recovery system 11 makes it possible to produce a force which propels the vehicle 1 and/or decreases aerodynamic drag.

As a result of the reduced drag and/or the tendency of the devices 11 to "propel" the vehicle, the vehicle's consumption and thus its pollution is reduced.

Finally, it is apparent that the parapet 10 according to the present invention may be subject to modifications and variations without thereby departing from the protective scope of the claims.

For example, the shape or number of the mobile portions could be different. The spring 16 could be replaced by another device having an equivalent function.

The limitation means 18 could be made in a different way, for example with a cable that allows a maximum travel of the mobile portion 13 or by a simple fixed stop on the vehicle's roof.

**Claims**

1. A vehicle (1) for the public transport of passengers comprising a parapet (10) fixed onto at least one part of the periphery of the roof (5) of said vehicle (1), said parapet (10) being configured to prevent said roof (5) from being visible at ground level, wherein said parapet (10) comprises at least one energy recovery system (11) configured to recover energy from the air that runs against said parapet (10) when said vehicle is in motion and/or when there is wind , **characterised in that** said at least one energy recovery system (11) comprises a fixed portion (12) attached to said parapet (10) and a mobile portion (13), carried by said parapet (10), movable with respect to said fixed portion (12), the mobile portion (13) moving as a result of the force exerted by the air that runs against it and **in that** said mobile portion (13) comprises at least one side wall (13a) having a curved shape.

2. The vehicle according to claim 1, **characterised in that** said mobile portion (13) pivots at one of its ends, with respect to said fixed portion (12).

3. The vehicle according to one of the claims 1 to 2, **characterised in that** said mobile portion (13) comprises a side wall (13a) towards the inside of the periphery of said parapet (10) having a convex shape and a side wall (13a) towards the outside of the periphery of said parapet (10) having a concave shape.

4. The vehicle according to one of the claims 1 to 3, **characterised in that** said at least one energy recovery system (11) comprises an elastic element which connects said mobile portion (13) to said fixed portion (12).

5. The vehicle according to claim 4, **characterised in that** said elastic element is a spring (16), a first end (16a) of said spring (16) being fixed to said fixed portion (12) and a second end (16b) of said spring (16) being fixed to said mobile portion (13).

6. The vehicle according to one of the claims 1 to 5, **characterised in that** the energy recovery system (11) comprises limitation means (18) which limit the travel of the mobile portion (13) with respect to the fixed portion (12) .

7. The vehicle according to claim 6, **characterised in that** said limitation means (18) limit an angular travel of the mobile portion (13) with respect to the fixed portion (12) such that said angular travel has a maximum of 20°.

8. The vehicle according to claim 6, **characterised in that** said limitation means (18) limit an angular travel of the mobile portion (13) with respect to the fixed portion (12) such that said angular travel is approximately 15°.

**Patentansprüche**

1. Ein Fahrzeug (1) für den öffentlichen Transport von Passagieren, umfassend eine Brüstung (10), die mindestens an einem Teil des Randes des Dachs (5) des Fahrzeugs (1) befestigt ist, wobei die Brüstung (10) ausgeführt ist, um zu verhindern, dass das Dach (5) von Bodenhöhe aus zu sehen ist, wobei die Brüstung (10) mindestens ein Energierückgewinnungssystem (11) umfasst, ausgeführt, um aus der Luft die gegen die Brüstung (10) strömt Energie zurückzugewinnen wenn das Fahrzeug in Bewegung ist und/oder wenn Wind vorhanden ist, **dadurch gekennzeichnet, dass** das mindestens eine Energierückgewinnungssystem (11) einen festen Teil (12), der an der Brüstung (10) befestigt ist, und einen beweglichen Teil (13) umfasst, der von der Brüstung (10) getragen wird und beweglich in Bezug auf den festen Teil (12) ist, wobei der bewegliche Teil (13) sich aufgrund der Kraft bewegt, welche von der Luft ausgeübt wird, die gegen ihn strömt, und wobei der bewegliche Teil (13) eine Seitenwand (13a) umfasst, die ein geschwungene Form hat.

2. Ein Fahrzeug nach Anspruch 1, **dadurch gekennzeichnet, dass** der bewegliche Teil (13) an einem seiner Enden in Bezug auf den festen Teil (12) drehbar gelagert ist.

3. Ein Fahrzeug nach Anspruch 1 oder 2, **dadurch gekennzeichnet, dass** der bewegliche Teil (13) zur Innenseite des Rands der Brüstung eine Seitenwand (13a) mit einer konvexen Form umfasst, und zur Außenseite des Rands der Brüstung eine Seitenwand (13a) mit einer konkaven Form.

4. Ein Fahrzeug nach einem der Ansprüche 1 bis 3, **dadurch gekennzeichnet, dass** das mindestens eine Energierückgewinnungssystem (11) ein elastisches Element umfasst, das den beweglichen Teil (13) mit dem festen Teil (12) verbindet.

5. Ein Fahrzeug nach Anspruch 4, **dadurch gekennzeichnet, dass** das elastische Element eine Feder (16) ist, wobei ein erstes Ende (16a) der Feder (16) an dem festen Teil (12) befestigt ist und ein zweites Ende (16b) der Feder (16) an dem beweglichen Teil (13) befestigt ist.

6. Ein Fahrzeug nach einem der Ansprüche 1 bis 5, **dadurch gekennzeichnet, dass** das Energierückgewinnungssystem (11) Begrenzungsmittel (18) umfasst, welche die Bewegung des beweglichen Teils (13) in Bezug auf den festen Teil (12) begrenzen.

7. Ein Fahrzeug nach Anspruch 6, **dadurch gekennzeichnet, dass** die Begrenzungsmittel (18) eine Winkelbewegung des beweglichen Teils (13) in Bezug auf den festen Teil (12) derart begrenzen, dass die Winkelbewegung ein Maximum von 20° hat.

8. Ein Fahrzeug nach Anspruch 6, **dadurch gekennzeichnet, dass** die Begrenzungsmittel (18) eine Winkelbewegung des beweglichen Teils (13) in Bezug auf den festen Teil (12) derart begrenzen, dass die Winkelbewegung etwa 15° beträgt.

**Revendications**

1. Véhicule (1) pour le transport public de passagers comprenant un parapet (10) fixé sur au moins une partie de la périphérie du toit (5) dudit véhicule (1), ledit parapet (10) étant configuré pour empêcher ledit toit (5) d'être visible au niveau du sol, dans lequel ledit parapet (10) comprend au moins un système de récupération d'énergie (11) configuré pour récupérer de l'énergie de l'air qui heurte ledit parapet (10) lorsque ledit véhicule est en mouvement et/ou lorsqu'il y a du vent, **caractérisé en ce que** ledit au moins un système de récupération d'énergie (11) comprend une portion fixe (12) attachée audit parapet (10) et une portion mobile (13), portée par ledit parapet (10), mobile par rapport à ladite portion fixe (12), la portion mobile (13) se déplaçant sous l'effet de la force exercée par l'air qui la heurte et **en ce que** ladite portion mobile (13) comprend au moins une paroi latérale (13a) présentant une forme incurvée.

2. Véhicule selon la revendication 1, **caractérisé en ce que** ladite portion mobile (13) pivote à une de ses extrémités, par rapport à ladite portion fixe (12).

3. Véhicule selon l'une des revendications 1 à 2, **caractérisé en ce que** ladite portion mobile (13) comprend une paroi latérale (13a) vers l'intérieur de la périphérie dudit parapet (10) présentant une forme convexe et une paroi latérale (13a) vers le côté extérieur de la périphérie dudit parapet (10) présentant une forme concave.

4. Véhicule selon l'une des revendications 1 à 3, **caractérisé en ce que** ledit au moins un système de récupération d'énergie (11) comprend un élément élastique qui raccorde ladite portion mobile (13) à ladite portion fixe (12).

5. Véhicule selon la revendication 4, **caractérisé en ce que** ledit élément élastique est un ressort (16), une première extrémité (16a) dudit ressort (16) étant fixée à ladite portion fixe (12) et une seconde extrémité (16b) dudit ressort (16) étant fixée à ladite portion mobile (13).

6. Véhicule selon l'une des revendications 1 à 5, **caractérisé en ce que** le système de récupération d'énergie (11) comprend des moyens de limitation (18) qui limitent le déplacement de la portion mobile (13) par rapport à la portion fixe (12).

7. Véhicule selon la revendication 6, **caractérisé en ce que** lesdits moyens de limitation (18) limitent un déplacement angulaire de la portion mobile (13) par rapport à la portion fixe (12) de sorte que ledit déplacement angulaire présente un maximum de 20°.

8. Véhicule selon la revendication 6, **caractérisé en ce que** lesdits moyens de limitation (18) limitent un déplacement angulaire de la portion mobile (13) par rapport à la portion fixe (12) de sorte que ledit déplacement angulaire soit approximativement de 15°.

FIG. 1

EP 3 412 910 B1

EP 3 412 910 B1

FIG. 2

FIG. 3

FIG. 4

7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3067877 A1
- CN 101508250 A
- JP 2014196667 A
- US 4181188 A
- JP 2005121001 A
- JP S5640580 U